# EUROPÄISCHE PATENTSCHRIFT

(11) **EP 3 292 751 B1**
(45) Veröffentlichungstag und Bekanntmachung des Hinweises auf die Patenterteilung: **14.08.2019**
(21) Anmeldenummer: 17190360.2
(22) Anmeldetag: 11.09.2017
(51) Int. Cl.: A01G 9/02

(54) **VORRICHTUNG FÜR EINE VERTIKALANPFLANZUNG**
DEVICE FOR VERTICAL PLANTING
DISPOSITIF POUR UNE PLANTATION VERTICALE

(30) Priorität: 13.09.2016 DE 202016105064 U; 09.02.2017 DE 202017100704 U
(43) Veröffentlichungstag der Anmeldung: 14.03.2018
(73) Patentinhaber: Simon, Reinhard, 99885 Ohrdruf (DE)
(72) Erfinder: Simon, Reinhard, 99885 Ohrdruf (DE)
(74) Vertreter: Kruspig, Volkmar

(56) Entgegenhaltungen:
- EP-A2- 0 623 276
- WO-A1-2014/100854
- CN-B- 103 081 743
- GB-A- 2 096 443
- US-A1- 2009 173 004

## Beschreibung

Die Erfindung betrifft eine Vorrichtung für eine Vertikalanpflanzung nach Anspruch 1.

Vorrichtungen für Vertikalanpflanzungen sind aus dem Stand der Technik bekannt. Sie dienen einer platzsparenden, aber auch dekorativen Anordnung von Pflanzgefäßen, die hierbei nicht innerhalb einer Fläche, sondern regalartig übereinander angeordnet werden. In diese Pflanzgefäße wird ein Pflanzsubstrat, insbesondere Gartenerde, eingefüllt, um darin Pflanzen einzusetzen oder Samen auszusäen. Bedingt durch das damit verbundene nicht unerhebliche Gewicht müssen derartige Vorrichtungen für Vertikalanpflanzungen hinreichend stabil sein. Andererseits müssen diese optimale Bedingungen für die Pflanzenwachstum gewährleisten und eine möglichst aufwandsarme Pflanzenpflege und somit einen guten Zugang zu den Pflanzen ermöglichen.

Die DE 10 2014 002 295 B4 offenbart beispielsweise ein Vertikalgartensystem sowie eine Pflanzwanne. Bei der dort gezeigten Vorrichtung ist ein Gestell mit zwei seitlich nebeneinander aufstellbarer Seitenteile vorgesehen. Diese bestehen jeweils aus einer Vorderstrebe und einer Hinterstrebe, die durch daran anbringbare Halteschienen verbunden sind. In diese Halteschienen wird eine Reihe von Pflanzwannen eingesetzt und zwar so, dass diese um eine gegebene Schwenkachse jeweils einzeln schwenkbar sind.

Die EP 2 322 031 B1 offenbart eine Haltevorrichtung für Pflanztöpfe. Vorgesehen ist dort eine leiterartige Rahmenvorrichtung, die mit weiteren Rahmenvorrichtungen zu einem grundsätzlich beliebig großen Gestell erweiterbar ist. In die Querstreben der leiterartigen Rahmenvorrichtung werden die im Wesentlichen rechteckigen Pflanztöpfe eingesetzt. Die Pflanztöpfe und Querstreben der Rahmenvorrichtung wie auch deren senkrechte Anschnitte sind so ausgebildet, dass die Pflanztöpfe um einen bestimmten Winkel aus dem Rahmen heraus gekippt werden können. Hierdurch wird der pflegende Zugang zu den Pflanzen erleichtert und ein optimaler Lichteinfall auf die Pflanzen ermöglicht. Die DE 20 2006 009 328 U1 offenbart eine Vorrichtung zur hängend-abgestützten Halterung von Blumentöpfen. Vorgesehen ist dort ein Brettkörper, dessen Grundform mannigfaltig ausgebildet sein kann und der sich gegebenenfalls auch mit anderen Brettkörpern zusammenstecken lässt. Der Brettkörper enthält so genannte Randaussparungen mit einem Stützabsatz, in welche sich jeweils der Rand eines Blumentopfes einhaken lässt. Dabei ist die Randaussparung so gestaltet, dass diese den Rand es Blumentopfs teilweise übergreift und so den Blumentopf sicher hält.

Die WO 2013/160889 A1 offenbart aufhängbare Pflanzbehältnisse. Vorgesehen sind dort Blumentöpfe mit einem mittig, und damit im Pflanzbereich der Pflanzbehältnisse angeordneten Zapfen, an dessen oberen Ende sich ein Haken befindet. Auf der Unterseite des Pflanzbehältnisses ist im Bereich der Unterseite des Zapfens eine Öse einsetzbar, in die sich ein Haken eines Zapfens eines weiteren gleichartig ausgebildeten Pflanzbehältnisses einsetzen lässt. Mehrere Pflanzbehältnisse lassen sich somit zu einer Kette verbinden. Zur Aufbewahrung lassen sich die Pflanzbehältnisse stapeln. Ein großer Nachteil dieser Vorrichtung ist es, dass der Zapfen einen nicht unerheblichen Teil des Volumens des Pflanzbehältnisses für das Setzen von Pflanzen unbenutzbar macht. Zwar lassen sich mehrere Pflanzenbehältnisse in einer Kette anordnen, aber die Kette wird schon nach relativ wenigen Gliedern sehr schwer, sodass der einzelne Haken am obersten Kettenglied, der beispielsweise an einer Raumdecke aufgehängt wird, sehr großen Belastungen unterliegt und bei Ermüdung relativ oft abzubrechen droht.

Die GB-A-2096443 offenbart eine Vertikalanpflanzung.

Die genannten übrigen Vorrichtungen sind in ihrer Gestaltung sehr aufwändig und erfordern einen nicht unbeträchtlichen Arbeitsaufwand zu deren Aufstellung.

Es besteht daher die Aufgabe, eine Vorrichtung für eine Vertikalanpflanzung anzugeben, die mit einfachen Mitteln aufgebaut werden kann, in sich hinreichend stabil bleibt, auch wenn eine größere Anzahl von Pflanzgefäßen vorhanden sind, und deren Pflanzbereich nicht durch Befestigungsmittel eingeschränkt ist.

Die Aufgabe wird mit einer Vorrichtung für eine Vertikalanpflanzung mit den Merkmalen des Anspruchs 1 gelöst. Die Unteransprüche enthalten zweckmäßige und/oder vorteilhafte Ausgestaltungen und Ausführungsformen.

Die Vorrichtung für eine Vertikalanpflanzung umfasst mehrere, vertikal zueinander anordenbare Pflanztröge zum Einfüllen eines Pflanzsubstrates. Jeder Pflanztrog weist an dessen Oberseite ein an einem Ausleger angeordnetes oberes Scharnierelement und ein in dessen Bodenbereich an der Außenseite angeordnetes unteres Scharnierelement auf, wobei die Pflanztröge über das jeweilige obere und/oder das jeweilige untere Scharnierelement zu einer Pflanztrogkette zusammenfügbar sind. Die Pflanztrogkette ist dabei eine über ein Gestell aufhängbare, sich durch das Gewicht der Pflanztröge ohne zusätzliche Befestigungsmittel selbst stabilisierende Anordnung, wobei bei der aufgehängten Pflanztrogkette die Pflanztröge seitlich aus der Ebene der Pflanztrogkette heraus gekippt sind.

Die Pflanztrogkette ist dabei so gebildet, dass die einzelnen Scharnierelemente nicht den Pflanzbereich einschränken. Die Pflanztrogkette ist auch so zusammengefügt, dass die einzelnen Pflanztröge seitlich aus der Kettenebene hinausgekippt und somit deren Pflanzbereiche leicht zugänglich sind. Zur Befestigung der Pflanztrogkette ist nur ein Gestell, z. B. ein Balkongeländer notwendig, über das die Pflanztrogkette als Ganzes gehängt werden kann und dort ohne weitere Befestigungsmittel ruht.

Das untere Scharnierelement ist dabei jeweils aus einer Reihe von alternierenden Scharnierhaken und Scharnierzylindern gebildet, während das obere Scharnierelement aus einer alternierenden Reihe aus Scharnierzylindern und Scharnierpfannen gebildet ist. Es können hierdurch zwei Verbindungen zwischen einzelnen Pflanztrögen gebildet werden.

Bei einer ersten Verbindung ist das untere Scharnierelement eines ersten Pflanztroges mit einem oberen Scharnierelement eines zweiten Pflanztroges miteinander verbindbar, wobei in die Scharnierhaken des unteren Scharnierelementes die Scharnierzylinder des oberen Scharnierelementes einhängbar und die Scharnierzylinder des unteren Scharnierelementes in die Scharnierpfannen des oberen Scharnierelementes einrastbar sind. Es entsteht dabei eine Anordnung aus zwei Pflanztrögen, die über ein Gestell gehängt werden kann.

Bei einer zweiten möglichen Verbindung ist das obere Scharnierelement eines ersten Pflanztroges mit einem oberen Scharnierelement eines zweiten Pflanztroges verbindbar, wobei die Scharnierzylinder des einen oberen Scharnierelementes jeweils in die Scharnierpfannen des anderen oberen Scharnierelementes einrastbar sind, wobei hierdurch eine an einem Holm aufhängbare Anordnung aus zwei miteinander verkoppelten Pflanztrögen entsteht. Es entsteht hierdurch eine Kette aus zwei untereinander verkoppelten Pflanztrögen, die nach beiden Seiten hin verlängert werden kann.

Das Gestell zum Aufhängen der Pflanztrogkette weist mindestens einen waagerechten Querholm auf, wobei zum Aufhängen der Pflanztrogkette zwei Pflanztröge an deren oberen Scharnierelementen verkoppelt sind und das dadurch gebildete Scharnier auf den Querholm aufgelegt ist, wobei hierdurch die miteinander verkoppelten Pflanztröge beidseitig des Holmes herabhängen. Diese Gestaltung kommt ohne zusätzliche Befestigungsmittel aus und ist durch das Gewicht der Pflanztröge in sich stabil.

Ergänzend kann das Gestell eine Reihe von den Querholm tragenden, gitterartig aufgereihten Stützstäben aufweisen, wobei die Stützstäbe ein Widerlager für die Pflanztröge der Pflanztrogkette bilden. Die Pflanztrogkette hängt dann nicht frei oder gegeneinander, sondern die Pflanztröge werden gegen die Stützstäbe gedrückt und erfahren dadurch einen durch deren Gewichtskraft hervorgerufenen sicheren Halt ohne zusätzliche Befestigungsmittel.

Bei einer Ausführungsform bildet das untere und/obere Scharnierelement einen integralen Bestandteil des Körpers des Pflanztroges und weist rippenartige Verstärkungselemente auf. Sie können beispielsweise zusammen mit den übrigen Bestandteilen des Pflanztroges in einem Spritzgußverfahren hergestellt werden.

Bei einer Ausführungsform weist der Ausleger des Pflanztroges eine Auslegerfläche auf, wobei die Auslegerfläche zum Ableiten von aus einem in der Pflanztrogkette darüber befindlichen Pflanztrog ablaufendem Wasser ausgebildet ist.

Bei einer weiteren Ausführungsform ist für den Pflanztrog eine in dessen Bodenbereich einsetzbare, mit Durchbrüchen versehene Bodenplatte vorgesehen, wobei unter der Bodenplatte ein Ablaufraum für aus dem Pflanzsubstrat innerhalb des Pflanztroges abtropfendes Wasser ausgebildet ist. Hierdurch wird Staunässe vermieden.

Bei einer Ausführungsform weist der Pflanztrog im Bodenbereich mindestens eine Ablauföffnung auf.

Die Vorrichtung soll nachfolgend anhand beispielhafter Ausführungsformen näher erläutert werden. Zur Verdeutlichung dienen die Figuren 1 bis 14. Es werden für gleiche und/oder gleichwirkende Teile dieselben Bezugszeichen verwendet.

Es zeigt:
- Fig. 1: eine auf einem Gestell aufgehängte beispielhafte Pflanztrogkette in einer Seitenansicht,
- Fig. 2: die Pflanztrogkette aus Fig. 1 in einer perspektivischen Ansicht,
- Fig. 3: die Pflanztrogkette aus Fig. 1 in einer weiteren perspektivischen Ansicht,
- Fig. 4: die Pflanztrogkette aus Fig. 1 in einer frontalen Ansicht,
- Fig. 5: die Pflanztrogkette aus Fig. 1 in einer weiteren frontalen Ansicht,
- Fig. 6: die Pflanztrogkette aus Fig. 1 im Schnitt,
- Fig. 7: ein einzelner Pflanztrog in einer Seitenansicht,
- Fig. 8: der Pflanztrog aus Fig. 7 in einer frontalen Ansicht,
- Fig. 9: der Pflanztrog aus Fig. 7 in einer umgekippten Darstellung mit einer perspektivischen Ansicht des Bodenbereichs,
- Fig. 10: eine Einzeldarstellung eines Scharniers,
- Fig. 11: eine Schnittdarstellung eines Scharniers im Bereich des oberen Gestellholms,
- Fig. 12: eine Schnittdarstellung eines Scharniers im Bereich der hängenden Abschnitte der Pflanztrogkette.
- Fig. 13: eine Bodenansicht des Pflanztrogs aus Fig. 7,
- Fig. 14: eine Schnittdarstellung des Pflanztrogs aus Fig. 7.

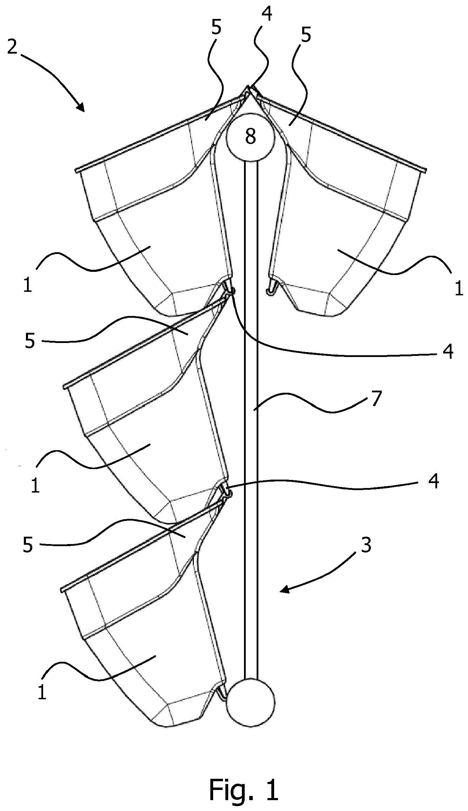

Fig. 1 zeigt eine beispielhafte Vorrichtung in einer Seitenansicht. Die Vorrichtung besteht aus einzelnen Pflanztrögen 1, die zu einer Pflanztrogkette 2 zusammengefügt sind. Die Pflanztrogkette ist über ein Gestell 3 gelegt und wird auf dem Gestell durch ihr eigenes Gewicht gehalten. Jeweils aufeinander folgende Pflanztröge sind dabei durch Scharniere 4 gelenkig miteinander verbunden und können somit gegeneinander gekippt werden. Die Lage der Scharniere an den einzelnen Pflanztrögen bewirkt, dass die Pflanztröge aus der Ebene der Pflanztrogkette heraus gekippt sind. Der mit dem Pflanzsubstrat, d.h. beispielsweise mit Gartenerde, zu befüllende Innenraum der Pflanztröge, ist somit bei der aufgehängten Pflanztrogkette von außen umstandslos zugänglich.

Die gekippte Anordnung der Pflanztröge wird durch die Positionen der Scharniere 4 realisiert. Diese befinden sich in den jeweils in den oberen Teilen der Pflanztröge an einem dort befindlichen Ausleger 5 sowie im unteren Teil der Pflanztröge unmittelbar am Körper des Pflanztroges selbst. Die offene Oberseite des Pflanztroges wird hierdurch nach außen gekippt und ist somit leicht zugänglich. Der Bodenbereich eines Pflanztroges befindet sich dabei unmittelbar über dem Bereich des Auslegers 5 des darunter befindlichen Pflanztroges.

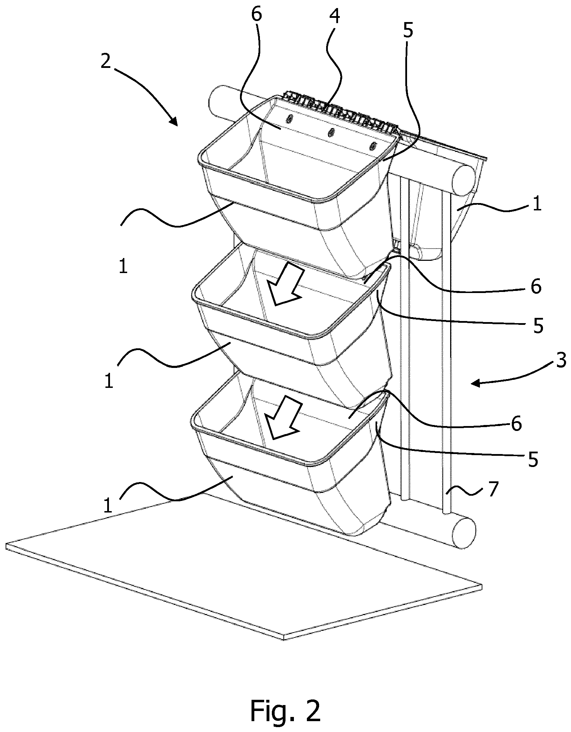

Fig. 2 zeigt die Vorrichtung aus Fig. 1 in einer perspektivischen Ansicht. Die Pflanztröge 1 weisen bei dieser Ausführungsform eine im Wesentlichen rechteckige Grundform auf. Wie hier gut zu erkennen ist, ist der Ausleger 5 des jeweiligen Pflanztroges innerhalb der hängenden Pflanztrogkette von dem Bodenbereich des darüber befindlichen Pflanztroges überdeckt. Der Ausleger 5 ist bei dem hier gezeigten Beispiel mit einer Auslegerfläche 6 ausgebildet. Diese bildet eine Auffangfläche für das aus dem Boden des darüber befindlichen Pflanztroges über dort angeordnete Öffnungen abfließende Wasser. Das Wasser wird über die Auslegerfläche somit in den weiter unten gelegenen Pflanztrog innerhalb der Pflanztrogkette abgeleitet und somit aufgefangen und weitergeleitet, wie hier durch Pfeile verdeutlicht ist.

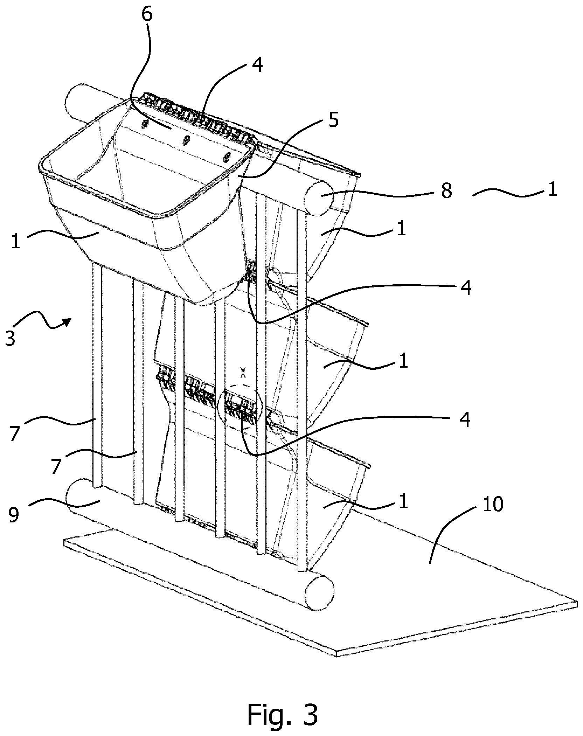

Fig. 3 zeigt die perspektivische Darstellung der Vorrichtung aus einem anderen Blickwinkel. Bei dieser Darstellung sind vor allem die Scharniere 4 gut zu erkennen. Diese verbinden zwei benachbarte Pflanztröge 1 entlang einer gesamten Seitenkante und somit nicht nur an einzelnen Verbindungspunkten. Die auf die Scharniere einwirkende Zugkraft infolge des nicht unerheblichen Gewichtes der darunter hängenden Pflanztröge wird somit auf eine größtmögliche Linie verteilt. Das Gestell 3, das zum Aufhängen der Pflanztrogkette dient, besteht in diesem Beispiel aus gitterartig angeordneten Stützstäben 7 sowie einem im oberen Bereich angeordneten Querholm 8. Wie der Figur zu entnehmen ist, liegen die Auslegerflächen 6 der beiden oberen Pflanztröge unmittelbar auf dem Querholm 8 auf. Die Kräfteverteilung erfolgt dabei so, dass die von dem jeweils längeren und damit in der Regel schwereren Abschnitt der Pflanztrogkette ausgeübte Zugkraft über das oberste Scharnier 4 in die obere Auslagerfläche und von dort in den Querholm abgeleitet wird.

Das Gestell weist einen Standfuß 9 auf, der mit einer Standfläche 10 an variablen Punkten verbunden werden kann. Hierdurch kann die unterschiedliche Gewichtsverteilung innerhalb einer auch asymmetrisch aufgehängten Pflanztrogkette durch einen entsprechend vergrößerten Abschnitt der Standfläche 10 ausgeglichen und ein Kippen der gesamten Anordnung verhindert werden.

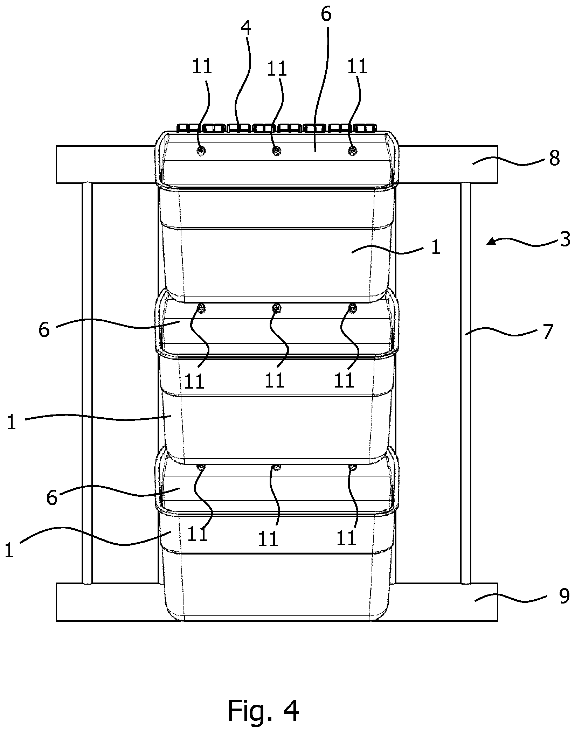

Fig. 4 zeigt die aufgehängte Pflanztrogkette in einer frontalen Ansicht. Wie der Darstellung zu entnehmen ist, empfiehlt es sich, die Pflanztrogkette auf das Gestell 3, d.h. insbesondere auf den Querholm 8, mittig aufzuhängen. Gut zu erkennen sind hier die Auslegerflächen 6 der jeweiligen Pflanztröge 1. Diese weisen eine Reihe von Muffen 11 auf, die ein mögliches Aufliegen der Bodenbereiche eines Pflanztroges auf die jeweils darunter befindliche Auslegerfläche abdämpfen und dabei genügend Raum zum Ablaufen des aus dem oberen Pflanztrog auf die darunter befindliche Auslegerfläche auslaufenden Wassers bereitstellen.

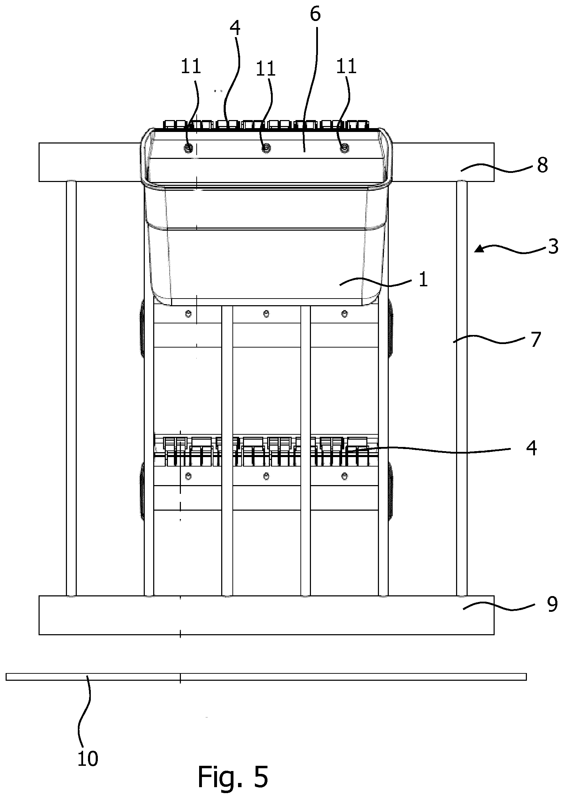

Fig. 5 zeigt die aufgehängte Pflanztrogkette in einer weiteren frontalen Ansicht, diesmal mit Blick auf die kürzere Seite der Pflanztrogkette. Zu erkennen sind hier insbesondere die Scharniere 4.

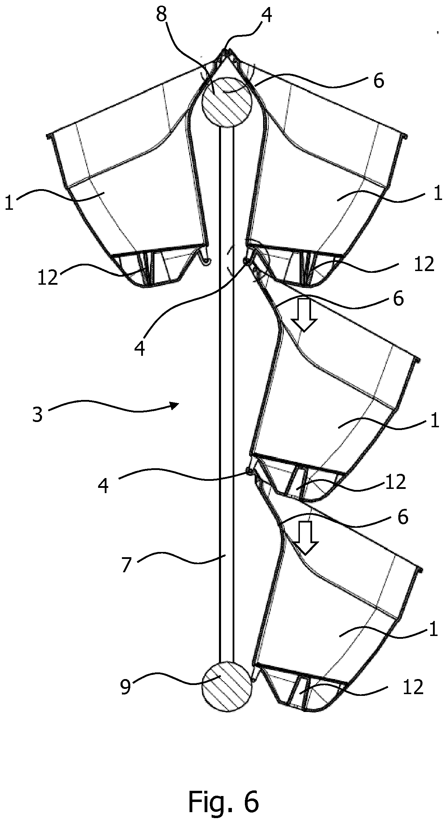

Fig. 6 zeigt die Pflanztrogkette 2 in einer Schnittdarstellung. Zu erkennen ist hier, dass die jeweiligen Pflanztröge in deren Bodenbereichen Ablauföffnungen 12 aufweisen, über die überschüssiges Wasser aus dem Pflanzsubstraten innerhalb der Pflanztröge abgeleitet werden kann, wodurch die Bildung von Staunässe innerhalb der Tröge vermieden wird. Das abgeleitete Wasser tropft dabei entweder direkt in den darunter befindlichen Pflanztrog oder zunächst auf die Auslegerfläche 6, von der es dann in das Pflanzsubstrat des Pflanztroges abfließen kann, wie durch die Pfeile verdeutlicht.

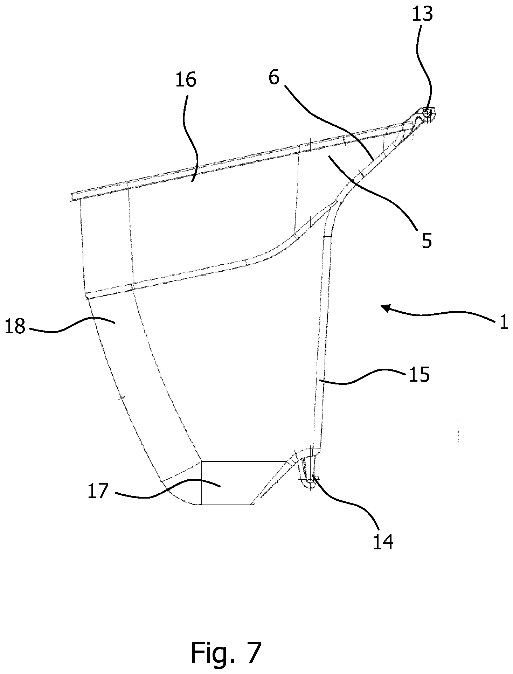

Fig. 7 zeigt einen einzelnen Pflanztrog 1. Wie bereits beschrieben weist der Pflanztrog einen Ausleger 5 mit einer Auslegerfläche 6 auf, die zu einem schrägen Hängen des Pflanztroges innerhalb der Pflanztrogkette führen. An dem einzelnen Pflanztrog ist am Ende des Auslegers 5 ein oberes Scharnierelement 13 und im Bodenbereich des Pflanztroges ein unteres Scharnierelement 14 angeordnet. Das untere Scharnierelement 14 befindet sich dabei nicht an einem Ausleger, sondern bildet eine im Wesentlichen in gerader Linie verlaufende vertikale Verlängerung einer Rückwand 15 des Pflanztroges. Der Pflanztrog weist eine bauchige Form auf. Dessen Querschnitt ist im Bereich eines oberen Bereichs 16 am größten und nimmt zum Bodenbereich 17 hin ab. Die nach außen weisende und innerhalb der Pflanztrogkette nach außen gekippte Außenseite 18 des Pflanztroges ist demnach bauchig gestaltet.

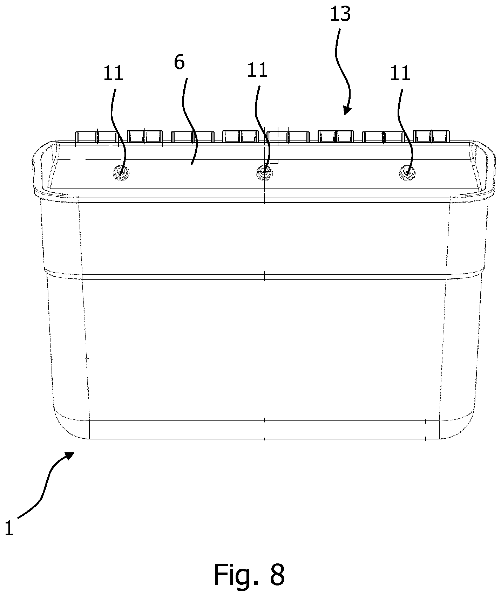

Fig. 8 zeigt den Pflanztrog 1 in einer Ansicht von vorn. Zu erkennen ist hier die Auslegerfläche 6, die darauf befindlichen Muffen 11 sowie das obere Scharnierelement 13.

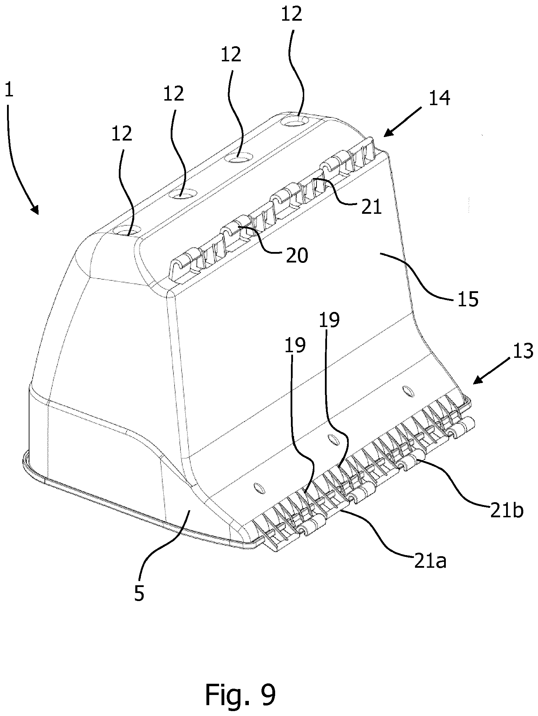

Fig. 9 zeigt eine umgekippte Darstellung des Pflanztroges 1. Zu erkennen ist hier das an dem Ausleger 5 befindliche obere Scharnierelement 13 und das im Bodenbereich angeordnete untere Scharnierelement 14. Beide Scharnierelemente bilden einen integralen Bestandteil des Körpers des Pflanztroges, sie können insbesondere im Rahmen eines Gießverfahrens zusammen mit dem übrigen Körper des Pflanztroges gefertigt werden. Das obere Scharnierelement 13 weist eine Reihe von rippenartigen Verstärkungselementen 19 auf. Das untere Scharnierelement 14 ist als eine alternierende Folge aus Scharnierhaken 20 und Scharnierzylindern 21 ausgebildet. Das obere Scharnierelement 13 besteht aus einer alternierenden Folge von oberen Scharnierzylindern 21a und Scharnierpfannen 21b.

Diese alternierenden Folgen der Scharnierelemente sind so ausgebildet, dass ein Scharnierhaken 20 an dem jeweils unteren Scharnierelement 14 mit einem Scharnierzylinder 21a an dem oberen Scharnierelement 13 eines weiteren Pflanztroges in Eingriff gebracht werden kann, wobei im Gegenzug die Scharnierzylinder 21 des jeweils unteren Scharnierelementes in die Scharnierpfannen 21b des jeweils oberen Scharnierelementes eintreten und dort gegebenenfalls einrasten. Es entsteht so ein in sich verschränktes und stabiles, gegen ein Herausrutschen und seitliches Herausgleiten gesichertes Scharnier mit wechselseitig eingreifenden Scharnierelementen.

Der Pflanztrog kann über das obere Scharnierelement 13 auch mit einem weiteren oberen Scharnierelement 13 eines weiteren Pflanztroges verbunden werden. Durch die alternierende Folge aus Scharnierhaken und Scharnierzylindern kommt es hierdurch zu einer Verbindung, bei der die Rückseiten 15 der Pflanztröge gegeneinander gekehrt werden müssen. Es entsteht dann über die Ausleger 5 eine Verbindung, die über den erwähnten Querholm 8 des Gestells gehängt werden kann und an deren jeweilige Bodenbereiche und unteren Scharnierelemente weitere Pflanztröge angefügt werden können. Die Figur 9 zeigt außerdem im Bodenbereich des Pflanztroges angeordnete Ablauföffnungen 12. Diese sind in dem hier vorliegenden Beispiel als in den Innenraum des Pflanztroges hineinragende Kegel ausgebildet.

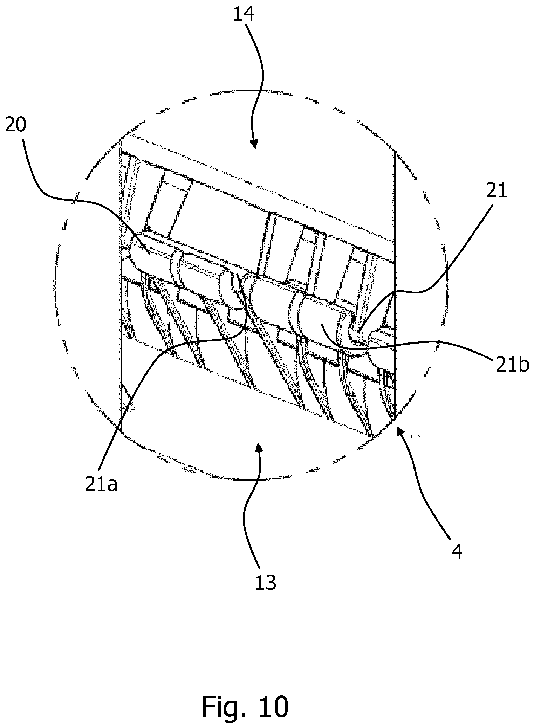

Fig. 10, Fig. 11 und Fig. 12 zeigen verschiedene Ansichten der hierdurch gebildeten Scharniere. In Fig. 10 ist ein oberes Scharnierelement 13 eines ersten Pflanztroges mit einem unteren Scharnierelement 14 eines darüber befindlichen Pflanztroges zu dem Scharnier 4 zusammengefügt. Es ist hier zu erkennen, wie der zu dem Scharnierelement 14 gehörende Scharnierhaken 20 den Scharnierzylinder 21a, der zu dem Scharnierelement 13 gehört, teilweise umgreift. Die Scharnierhaken werden hierzu beim Zusammenfügen des Scharniers um die Scharnierzylinder herum eingeschwenkt. Dabei treten die zu dem Scharnierelement 14 gehörenden Scharnierzylinder 21 in die Scharnierpfannen 21b des oberen Scharnierelementes ein und verrasten gegebenenfalls dort, wodurch die Stabilität des dabei entstehenden Scharniers gesteigert wird.

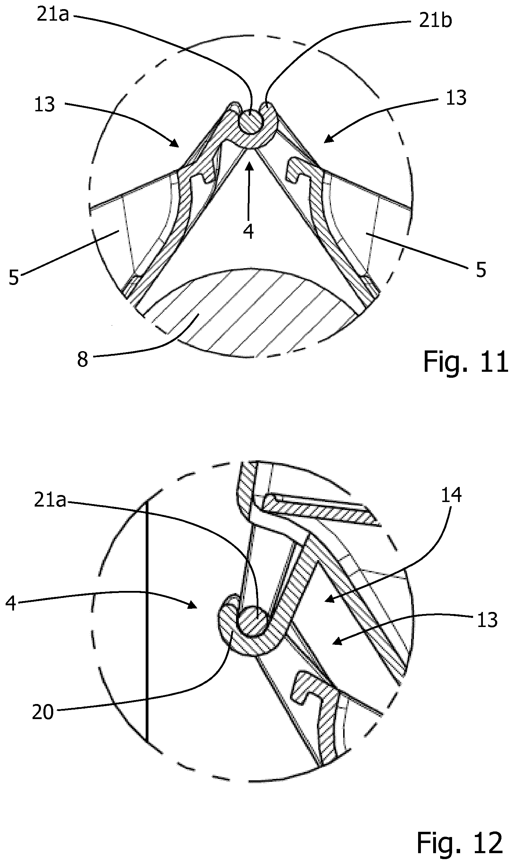

Fig. 11 zeigt die Verbindung zweier oberer Scharnierelemente 13 zum beidseitigen Aufhängen zweier Pflanztröge im Bereich des Querholms 8. Bei dieser Verbindung greift jeweils ein Scharnierzylinder 21a in jeweils eine Scharnierpfanne 21b ein. Durch die Lage der Scharnierpfannen bzw. der Scharnierzylinder an den Scharnierelementen 13 wird eine Kraftaufnahme erreicht, die jeweils schräg nach unten gerichtet ist und somit das Aufhängen der so miteinander verkoppelten Pflanztröge an dem Querholm ermöglicht.

Fig. 12 zeigt hingegen die Ausführung des Scharniers 4 im Bereich der hängenden Abschnitte der Pflanztrogkette, bei der das obere Scharnierelement 13 des einen Pflanztroges mit dem unteren Scharnierelement 14 des anderen Pflanztroges miteinander verbunden sind. In diesem Fall greift der Scharnierzylinder 21a in den Scharnierhaken 20 ein.

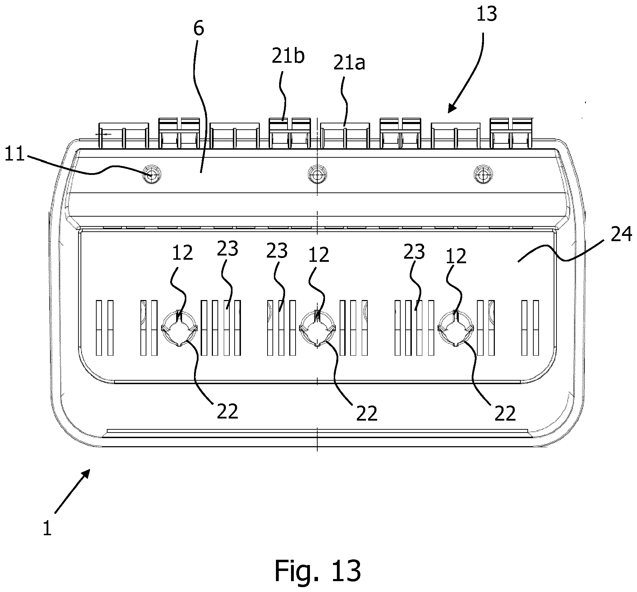

In Fig. 13 sind die Ablauföffnungen deutlicher zu erkennen. Die Figur zeigt den Pflanztrog in einer Ansicht von oben. Die die Ablauföffnungen 12 enthaltenen Ablaufkegel sind hier mit dem Bezugszeichen 22 bezeichnet. Die Ablaufkegel und die hierdurch in einer bestimmten Höhe angeordneten und somit in das Pflanzsubstrat hineinreichenden Ablauföffnungen ermöglichen ein Auslaufen der vorhandenen Nässe, das erst bei einem bestimmten Wasserstand im Pflanztrog einsetzt.

Bei der hier gezeigten Ausführungsform ist außerdem eine Reihe von Schlitzen 23 ausgebildet, die ebenfalls als Auslauföffnungen dienen. Diese befinden sich in einer in den Pflanztrog eingesetzten Bodenplatte 24. Das abtropfende Wasser kann sich hierbei in dem Raum unter der Bodenplatte sammeln.

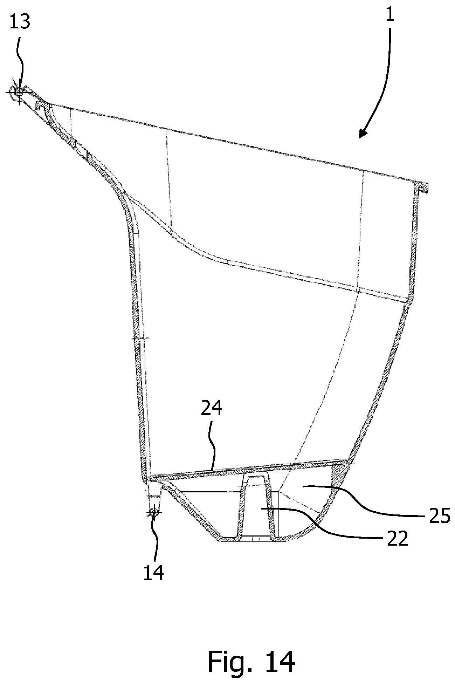

Fig. 14 zeigt den Pflanztrog 1 im Schnitt. Zu erkennen ist hier insbesondere die Bodenplatte 24 und der Ablaufkegel 22. Der Raum zwischen der Bodenplatte 24 und dem Grund des Pflanztroges wird durch einen Ablaufraum 25 gebildet, in welchem sich das aus dem Pflanzsubstrat ablaufende Wasser sammeln kann.

Die Erfindung wurde anhand von Ausführungsbeispielen erläutert. Im Rahmen fachmännischen Handelns sind weitere Ausführungsformen möglich. Diese ergeben sich ebenfalls aus den Unteransprüchen.

### Bezugszeichenliste

- 1: Pflanztrog
- 2: Pflanztrogkette
- 3: Gestell
- 4: Scharnier
- 5: Ausleger
- 6: Auslegerfläche
- 7: Stützstab
- 8: Querholm
- 9: Standfuß
- 10: Standfläche
- 11: Muffe
- 12: Ablauföffnung
- 13: Oberes Scharnierelement
- 14: Unteres Scharnierelement
- 15: Rückwand
- 16: Oberer Pflanztrogbereich
- 17: Bodenbereich
- 18: Außenseite
- 19: Rippenartiges Verstärkungselement
- 20: Scharnierhaken
- 21: Scharnierzylinder
- 21a: oberer Scharnierzylinder
- 21b: Scharnierpfanne
- 22: Ablaufkegel
- 23: Schlitz
- 24: Bodenplatte
- 25: Ablaufraum

## Patentansprüche

1. Vorrichtung für eine Vertikalanpflanzung, umfassend mehrere Pflanztröge (1) zum Einfüllen eines Pflanzsubstrates, wobei
jeder Pflanztrog an dessen Oberseite ein an einem Ausleger (5) angeordnetes oberes Scharnierelement (13) und ein in dessen Bodenbereich an der Außenseite angeordnetes unteres Scharnierelement (14) aufweist, **dadurch gekennzeichnet, dass** die Pflanztröge über das jeweilige obere und/oder das jeweilige untere Scharnierelement zu einer über Scharniere (4) gelenkig verbundenen Pflanztrogkette (2) zusammenfügbar sind, wobei die Pflanztrogkette eine über ein Gestell (3) aufhängbare, sich durch das Gewicht der Pflanztröge ohne zusätzliche Befestigungsmittel selbst stabilisierende Anordnung bildet, bei der die Pflanztröge seitlich aus der Ebene der Pflanztrogkette heraus gekippt sind.

2. Vorrichtung nach Anspruch 1,
**dadurch gekennzeichnet, dass**
das obere Scharnierelement (13) aus einer alternierenden Reihe aus Scharnierzylindern (21a) und Scharnierpfannen (21b) gebildet ist, während das untere Scharnierelement (14) jeweils aus einer alternierenden Reihe von alternierenden Scharnierhaken (20) und Scharnierzylindern (21) gebildet ist.

3. Vorrichtung nach Anspruch 2,
**dadurch gekennzeichnet, dass**
das untere Scharnierelement (14) eines ersten Pflanztroges (1) mit einem oberen Scharnierelement (13) eines zweiten Pflanztroges miteinander zu einem Scharnier verbindbar ist, wobei in die Scharnierhaken (20) des unteren Scharnierelementes die Scharnierzylinder (21a) des oberen Scharnierelementes einhängbar sind und die Scharnierzylinder (21) des unteren Scharnierelementes in die Scharnierpfannen (21b) des oberen Scharnierelementes einrastbar sind.

4. Vorrichtung nach Anspruch 2,
**dadurch gekennzeichnet, dass**
das obere Scharnierelement (13) eines ersten Pflanztroges (1) mit einem oberen Scharnierelement (13) eines zweiten Pflanztroges verbindbar ist, wobei die Scharnierzylinder (21a) des einen oberen Scharnierelementes jeweils in die Scharnierpfannen (21b) des anderen oberen Scharnierelementes einrastbar sind, wobei hierdurch eine an einem Holm aufhängbare Anordnung aus zwei miteinander verkoppelten und beidseitig vom Holm abstehenden Pflanztrögen entsteht.

5. Vorrichtung nach einem der vorhergehenden Ansprüche,
**dadurch gekennzeichnet, dass**
das Gestell (3) mindestens einen waagerechten Querholm (8) aufweist, wobei zum Aufhängen der Pflanztrogkette (2) zwei Pflanztröge (1) an deren oberen Scharnierlementen (13) verkoppelt sind und das dadurch gebildete Scharnier auf den Querholm auflegbar ist, wobei hierdurch die miteinander verkoppelten Pflanztröge beidseitig des Holmes herabhängen.

6. Vorrichtung nach einem der vorhergehenden Ansprüche,
**dadurch gekennzeichnet, dass**
das Gestell (3) eine Reihe von den Querholm (8) tragenden, gitterartige aufgereihten Stützstäben (7) aufweist, wobei die Stützstäbe ein Widerlager für die Pflanztröge (1) der Pflanztrogkette (2) bilden.

7. Vorrichtung nach einem der vorhergehenden Ansprüche,
**dadurch gekennzeichnet, dass**
das untere und/obere Scharnierelement (13, 14) einen integralen Bestandteil des Körpers des Pflanztroges bilden und rippenartige Verstärkungselemente (19) aufweisen.

8. Vorrichtung nach einem der vorhergehenden Ansprüche,
**dadurch gekennzeichnet, dass**
der Ausleger (5) des Pflanztroges eine Auslegerfläche (6) aufweist, wobei die Auslegerfläche zum Ableiten von aus einem in der Pflanztrogkette (2) darüber befindlichem Pflanztrog ablaufendem Wasser ausgebildet ist.

9. Vorrichtung nach einem der vorhergehenden Ansprüche,
**dadurch gekennzeichnet, dass**
für den Pflanztrog (1) eine in dessen Bodenbereich einsetzbare, mit Durchbrüchen versehene Bodenplatte (24) vorgesehen ist, wobei unter der Bodenplatte ein Ablaufraum für aus dem Pflanzsubstrat innerhalb des Pflanztroges abtropfendes Wasser ausgebildet ist.

10. Vorrichtung nach einem der vorhergehenden Ansprüche,
**dadurch gekennzeichnet, dass**
der Pflanztrog (1) im Bodenbereich mindestens eine Ablauföffnung (12) aufweist.

## Claims

1. A vertical planting device, comprising:
plural plant troughs (1) for filling in a plant substrate,
wherein each plant trough includes an upper hinge element (13) arranged at an outrigger (5) at a top side of the plant trough and a lower hinge element (14) arranged at an outside of the plant trough in a base portion of the plant trough,
**characterized in that** the plant troughs are joinable through the respective upper and/or lower hinge element to form a plant trough chain (2) that is pivotably linked by hinges (4),
wherein the plant trough chain forms an arrangement that is suspendable at a frame (3) and that self stabilizes through a weight of the plant troughs without additional fastening devices wherein the plant troughs are laterally tilted from the plane of the plant trough chain.

2. The device according to claim 1,
**characterized in that**
the upper hinge element (13) is formed from an alternating series of hinge cylinders (21a) and hinge receivers (21b), whereas the lower hinge element (14) is respectively formed from an alternating row of alternating hinge hooks (20) and hinge cylinders (21).

3. The device according to claim 2,
**characterized in that**
the lower hinge element (14) of a first plant trough (1) is connectable with an upper hinge element (13) of a second plant trough to form a hinge, wherein the hinge cylinders (21a) of the upper hinge element are engageable at the hinge hooks (20) of the lower hinge element and the hinge cylinders (21) of the lower hinge element are interlockable in the hinge receivers (21b) of the upper hinge element.

4. The device according to claim 2,
**characterized in that**
the upper hinge element (13) of a first plant trough (1) is connectable with an upper hinge element (13) of a second plant trough, wherein the hinge cylinders (21a) of the upper hinge element are respectively interlockable in the hinge receivers (21b) of the other upper hinge element so that an arrangement of two coupled plant troughs is created that protrude on two sides from a beam and that are suspendable at the beam.

5. The device according to one of the preceding claims,
**characterized in that**
the frame (3) includes at least one horizontal transversal beam (8) wherein two plant troughs (1) are coupled at their upper hinge elements (13) in order to suspend the plant trough chain (2) so that the formed hinge is placeable onto the transversal beam, wherein the plant troughs that are thus coupled together hang down on both sides of the beam.

6. The device according to one of the preceding claims,
**characterized in that**
the frame (3) includes a series of support rods (7) that support the transversal beam (8) and that are lined up in a lattice form, wherein the support rods form a reaction bearing for the plant troughs (1) of the plant trough chain.

7. The device according to one of the preceding claims,
**characterized in that** the lower and/or the upper hinge element (13, 14) form an integral portion of a body of the plant trough and include rib shaped reinforcement elements (19).

8. The device according to one of the preceding claims,
**characterized in that**
the outrigger (5) of the plant trough includes an outrigger surface (6), wherein the outrigger surface is configured to drain water that drains from a plant trough that is above in the plant trough chain (2).

9. The device according to one of the preceding claims,
**characterized in that**
a base plate (24) is provided for the plant trough (1) and insert able into a base portion of the plant trough (1) and provided with cut outs, wherein a drain cavity is formed below the base plate for water that drips from the plant substrate within the plant trough.

10. The device according to one of the preceding claims,
**characterized in that**
the plant trough (1) includes at least one drain opening (12) in the base portion.

## Revendications

1. Dispositif pour une plantation verticale, comportant plusieurs pots pour plantes (1) pour y remplir un substrat de plantation,
dans lequel
chaque pot comprend à son côté supérieur un élément de charnière (13) supérieur agencé sur un bras (5), et un élément de charnière (14) inférieur agencé sur le côté extérieur au niveau de son fond,
**caractérisé en ce que**
les pots sont susceptibles d'être assemblés par l'élément de charnière supérieur respectif et/ou inférieur respectif pour donner une chaîne de pots (2) reliée en articulation par des charnières (4),
la chaîne de pots forme un ensemble susceptible d'être suspendu par un bâti (3) et auto-stabilisant par le poids des pots sans moyen de fixation supplémentaire, ensemble dans lequel les pots sont pivotés latéralement hors du plan de la chaîne de pots.

2. Dispositif selon la revendication 1,
**caractérisé en ce que**
l'élément de charnière (13) supérieur est formé par une rangée alternante de cylindres de charnière (21a) et de cavités de charnière (21b), tandis que l'élément de charnière (14) inférieur est formé respectivement par une rangée alternante de crochets de charnière (20) et de cylindres de charnière (21).

3. Dispositif selon la revendication 2,
**caractérisé en ce que**
l'élément de charnière (14) inférieur d'un premier pot (1) est susceptible d'être relié à un élément de charnière (13) supérieur d'un second pot pour donner une charnière, les cylindres de charnière (21a) de l'élément de charnière supérieur pouvant être accrochés dans les crochets de charnière (20) de l'élément de charnière inférieur, et les cylindres de charnière (21) de l'élément de charnière inférieur pouvant s'enclencher dans les cavités de charnière (21b) de l'élément de charnière supérieur.

4. Dispositif selon la revendication 2,
**caractérisé en ce que**
l'élément de charnière (13) supérieur d'un premier pot (1) est susceptible d'être relié à un élément de charnière (13) supérieur d'un second pot, les cylindres de charnière (21a) dudit un élément de charnière supérieur pouvant s'enclencher respectivement dans les cavités de charnière (21b) de l'autre élément de charnière supérieur, moyennant quoi il résulte un ensemble susceptible d'être suspendu sur un longeron et constitué de deux pots couplés l'un à l'autre et faisant saillie de part et d'autre du longeron.

5. Dispositif selon l'une des revendications précédentes,
**caractérisé en ce que**
le bâti (3) comprend au moins un longeron transversal (8) horizontal,
et pour suspendre la chaîne de pots (2), deux pots (1) sont couplés au niveau de leurs éléments de charnière (13) supérieurs, et la charnière ainsi formée peut être posée sur le longeron transversal, moyennant quoi les pots couplés entre eux pendent vers le bas de part et d'autre du longeron.

6. Dispositif selon l'une des revendications précédentes,
**caractérisé en ce que**
le bâti (3) comprend une rangée de barres de soutien (7) portant le longeron transversal (8) et mis en forme de grille, les barres de soutien constituant une contrebutée pour les pots (1) de la chaîne de pots (2).

7. Dispositif selon l'une des revendications précédentes,
**caractérisé en ce que**
l'élément de charnière (13, 14) inférieur et/ou supérieur forment une partie intégrale du corps du pot et présentent des éléments de renforcement (19) en forme de nervures.

8. Dispositif selon l'une des revendications précédentes,
**caractérisé en ce que**
le bras (5) du pot présente une surface de bras (6), la surface de bras étant réalisée pour évacuer de l'eau sortant d'un pot situé au-dessus dans la chaîne de pots (2).

9. Dispositif selon l'une des revendications précédentes,
**caractérisé en ce que**
pour le pot (1), il est prévu une plaque de fond (24) susceptible d'être insérée au niveau de son fond et pourvue de traversées, et au-dessous de la plaque de fond est prévu un espace d'évacuation pour de l'eau gouttant hors du substrat de plantation à l'intérieur du pot.

10. Dispositif selon l'une des revendications précédentes,
**caractérisé en ce que**
le pot (1) présente au moins une ouverture d'évacuation (12) au niveau du fond.
